Europäisches Patentamt

European Patent Office

Office européen des brevets

(11) Publication number: **0 487 135 A1**

# EUROPEAN PATENT APPLICATION

(21) Application number: **91202924.6**

(22) Date of filing: **11.11.91**

(51) Int. Cl.⁵: **F16L  55/165**, E03F 3/06

(30) Priority: **20.11.90 NL 9002532**

(43) Date of publication of application:
**27.05.92 Bulletin  92/22**

(84) Designated Contracting States:
**AT BE CH DE DK ES FR GB GR IT LI LU NL SE**

(71) Applicant: **WAVIN B.V.**
**Händellaan 251**
**NL-8031 EM Zwolle(NL)**

(72) Inventor: **Eikenaar, Hendrik Jan**
**14, Oosteresch**
**NL-7783 GP Gramsbergen(NL)**
Inventor: **Rookus, Cornelis Abraham Pieter**
**21, Leie**
**NL-8032 ZD Zwolle(NL)**

(74) Representative: **van der Kloet-Dorleijn,**
**Geertruida W.F., Drs. et al**
**EXTERPATENT B.V. P.O. Box 90649**
**NL-2509 LP The Hague(NL)**

(54) **Plastic pipe section for renovating a part of a pipeline without branches.**

(57) A pipe section provided with at least one spigot end with the same internal diameter as the pipe section for renovating a part of a pipeline without branches, said pipe section being provided in an undetachable manner at the transition to the spigot end (8a, 8b) with a stiffening ring (4a, 4b) having a larger external diameter than the external diameter of the pipe section. The spigot end (8a, 8b) is provided with a groove (5a, 5b) for the accommodation of sealing elements which can interact with the inside of a plug socket (7).

Spigot ends (8a, 8b) of two adjacent pipe sections (2a, 3b) are accommodated in a plug socket (7), the length of plug socket (7) being greater than the distance between the supporting faces (11, 11b) of the spigot ends (8a, 8b) of two adjacent pipe sections.

The pipe section is preferably made of fibre-reinforced thermoplastic material.

The invention relates to a pipe section provided with at least one spigot end with the same internal diameter as the pipe section for renovating a pipeline without branches.

It is known that closed pipelines such as, for example, large drinking water pipelines made of, for example, concrete acquire a changed profile after the passage of time, due to ground subsidence. This changed profile manifests itself at the position of the connections in angular displacements and sagging, which produces a great risk of fracture in the pipe.

Digging up these pipes is, however, not only expensive, but also leads to insurmountable economic problems such as traffic problems.

These existing pipelines can, however, be renovated through the fitting of an internal lining, without such pipes having to be removed or dug up.

For this purpose, German Gebrauchsmuster No. 8,428,374 proposes a plastic pipe section for renovating pipelines, comprising a pipe section which at one end is provided with a bevelled spigot end and at the other end is provided with a socket end. During the insertion of such pipe sections into a closed pipeline the bevelled spigot end of one pipe end has to engage in the socket end of the adjacent pipe section, until the spigot end of the one pipe section knocks against the end of the socket of the adjacent pipe section.

However, when such a plastic pipe of fibre-reinforced thermosetting plastic is used, the problem occurs that when the pipe section is being inserted into an existing pipeline fairly great forces are required, as a result of which the pipe section is damaged and delaminations occur. The spigot end of this known pipe section is also easily damaged, due to the fact that it has to engage in the socket end of an adjacent pipe section, which socket end - because of angular displacement as a result of sagging of the pipe to be lined - will not, however, lie perfectly in the direction of movement of the spigot end of the pipe section to be inserted.

The use of a pipe section of fibre-reinforced thermosetting plastic is, however, very desirable in the case of pipelines for the conveyance of media which are not to be allowed to come into contact with thermoplastic materials, while such pipes can also easily be made in many different diameters and wall thicknesses which are not economically justifiable for thermoplastic materials.

A pipe section which eliminates these disadvantages has now been found.

This pipe section according to the invention is characterised in that the pipe section is provided in an undetachable manner with a stiffening ring at the transition to the spigot end.

The spigot end of a pipe section, preferably of fibre-reinforced plastic material, is expediently bounded at the end facing away from its free end by a stiffening ring with a larger external diameter than the external diameter of the pipe section.

The thickened part prevents the spigot end from being damaged during the insertion of the pipe section into a pipe system, as a result of which medium could leak out of the pipe section later, while the pipe section is also stiffened, as a result of which it is easier to insert such a pipe section into an existing closed pipeline.

The stiffening ring of the pipe section according to the invention is preferably provided with a bevel at the side facing away from the adjacent spigot end. This prevents the pipe section from being delaminated during insertion, for the stiffening ring constitutes the thickest part of the present pipe section and acts as a skid during the insertion. Since in the finished lining this stiffening ring, after placing of the pipe section, cannot come into contact with the medium under pressure to be conveyed through the finished pipe, any damage to said stiffening ring will have no consequences, and no leakage will consequently be able to occur through this damage.

Spigot ends of two adjacent pipe sections are preferably accommodated in a plug socket.

The spigot ends are also preferably provided with a groove for the accommodation of sealing elements which can interact with the inside of the plug socket. These sealing elements are preferably sealing rings.

Through this shape of the socket and the spigot end it has been found possible to accommodate slight angular displacements occurring through sagging of the pipe to be lined.

According to a special embodiment of the pipe section according to the invention, the length of the plug socket is greater than the distance between the supporting faces of the spigot ends of two adjacent pipe sections.

As a result of this measure, the spigot ends of two pipe sections inserted one after the other are prevented from coming into contact with each other and damaging each other.

Socket and spigot end are preferably designed in such a way that an angular displacement of 1 to 3 degrees per sealing ring is possible, depending on the pipe diameter. Such an angular displacement can be produced through sagging of pipes. However, the invention makes it possible to follow such angular displacements during the insertion of the pipe sections without damage which could have consequences for the finished pipe being able to occur.

The end face of a spigot end is expediently bevelled, which will facilitate the insertion without damage to the pipe section.

The material from which the pipe sections according to the invention is preferably made is a fibre-reinforced thermosetting plastic such as a glassfibre/epoxy mixture. Such a material is not very susceptible to damage, with the result that pipes of relatively great length are possible. Besides, such a laminate makes the production of a pipe with varying thicknesses possible simply, and therefore cheaply.

The invention is not, however, limited to the use of a glassfibre laminate; any other material which is suitable for use as a covering in a pipe can, of course, also be used.

The invention also relates to a pipeline which is provided with an internal lining composed of pipe sections interconnected by a socket connection, which is characterised in that each pipe section bears a spigot end, and the spigot ends of two adjacent pipes interact in a sealing manner with a socket.

The end faces of the spigot ends of two adjacent pipes are preferably held at a distance from each other by the socket.

The invention is explained in greater detail with reference to the appended drawing, in which a pipe section incorporated in a pipe to be renovated is shown schematically.

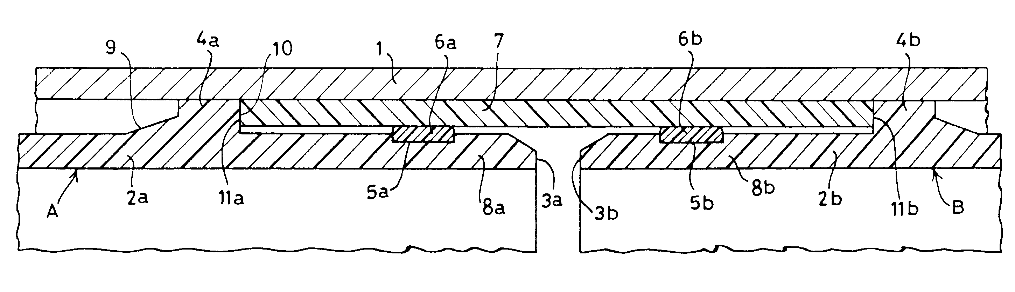

A closed concrete pipe system, for example a water pipe system, is shown by 1 in Figure 1. The pipe system can, however, also be made of, for example, asbestos cement, cast iron or steel. For the renovation of such a pipe system this system is opened up at the fewest possible number of places, following which the pipe sections 2 which are going to form the internal lining are pressed into the pipe system from these opened places.

A pipe section 2 is always provided with a spigot end at each end.

These pipe sections 2 are glassfibre-reinforced thermosetting pipes. In order to prevent delamination of the material preferably used for the pipe sections, i.e. fibre-reinforced pipes of thermosetting plastic, pipe section 2 is provided with a collar or stiffening ring 4a. This stiffening ring 4a is provided with a bevel 9 at the side facing away from the adjacent end face 3a of the spigot end 8a. At the other side, each spigot end 8a is bevelled, thus forming a nose 3a.

Each spigot end 8a is also provided with a groove 5a in which a sealing ring 6a is accommodated. After the insertion of pipe section 2a, said sealing ring 6a will interact with the socket 7 subsequently to be inserted in the pipe 1 to be renovated, and will thus ensure a complete seal of pipe section 2a. Socket 7 also interacts with a sealing ring 6b of pipe section 8b of an adjacent pipe section 2, as shown in the figure. The length of socket 7 must be greater than the distance between the supporting faces 11a, 11b of the spigot ends 8a and 8b respectively of the two adjacent pipe sections. This prevents the noses 3a and 3b respectively of the beginning and end respectively of successive pipes from being able to touch each other, as a result of which damage, and therefore delamination, is prevented.

Through the shape of socket 7 and spigot end 8a, 8b, an angular displacement of approximately 2 degrees per sealing ring is possible, which in practice has been found to be sufficient to follow the angular displacement occurring through sagging in the case of pipes of large diameter.

It is pointed out that each end of a pipe section according to the invention is provided with a spigot end as described above.

In the drawing the same reference numbers for the same parts are used for the pipes A and B, but are followed by (a) and (b) for pipe A and pipe B respectively.

Moreover, the insertion of the pipe sections according to the invention into a pipe system which has local irregularities can only lead to damage of the stiffening ring 4a, 4b respectively. This cannot, however, lead to leakage from the pipe section, since due to the shape of socket 7 and spigot end 8a, 8b the pressure medium only can come into contact with the part of the socket 7 which is situated between the two sealing rings 6a and 6b.

The socket 7 is advantageously also made of fibre-reinforced thermosetting plastic.

A slight play is usually provided between stiffening ring 4a and the inside wall of the pipeline to be renovated.

## Claims

1. A pipe section provided with at least one spigot end with the same internal diameter as the pipe section for renovating a part of a pipeline without branches, characterised in that the pipe section is provided in an undetachable manner with a stiffening ring (4a, 4b) at the transition to the spigot end (8a, 8b).

2. A pipe section provided with at least one spigot end for internally renovating a part of a pipeline without branches according to claim 1, characterised in that the spigot end (8a, 8b) of a pipe section (2a, 2b) is bounded at the end facing away from its free end by a stiffening ring (4a, 4b) with a larger external diameter than the external diameter of the pipe section.

3. A pipe section according to claim 1 or 2, characterised in that the stiffening ring (4a, 4b) is provided with a bevel (9) at the side facing away from the connecting spigot end (8a, 8b).

4. A pipe section according to claims 1 to 3, characterised in that the spigot end (8a, 8b) is provided with a groove (5a, 5b) for the accommodation of sealing elements which can interact with the inside of a plug socket (7).

5. A pipe section according to claims 1 to 4, characterised in that each end of a pipe section bears a spigot end.

6. A pipe section according to one or more of claims 1 to 5, characterised in that the spigot ends (8a, 8b) of two adjacent pipe sections (2a, 3b) are accommodated in a plug socket (7).

7. A pipe section according to claim 6, characterised in that the length of plug socket (7) is greater than the distance between the supporting faces (11a, 11b) of the spigot ends (8a, 8b) of two adjacent pipe sections.

8. A pipe section according to claims 1 to 7, characterised in that socket (7) and spigot end (8a, 8b) are designed in such a way that an angular displacement of at least one degree per sealing element is possible.

9. A pipe section according to claims 1 to 7, characterised in that the end face of a spigot end is bevelled.

10. A pipe section according to claims 1 to 7, characterised in that the pipe section is made of fibre-reinforced thermoplastic material.

11. A pipeline provided with an internal lining comprising pipe sections interconnected by a socket connection, characterised in that the pipe section is a pipe section according to claims 1 to 10.

12. A pipeline according to claim 11, characterised in that the pipeline is made of concrete or asbestos cement.

13. A pipeline provided with an internal lining comprising pipe sections interconnected by a socket connection, characterised in that each pipe section bears at each end a spigot end (8a, 8b), and the spigot ends (8a, 8b) of two adjacent pipes interact in a sealing manner with a socket (7).

14. A pipeline according to claim 12, characterised in that the end faces (3a, 3b) of spigot ends (8a, 8b) are held at a distance from each other by the socket (7).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 299 130 (PERSSON, K.) <br><br> * column 1, line 17 - column 2, line 37; figures 1,2 * | 1,2,5,6, 9,11,12 | F16L55/165 <br> E03F3/06 |
| A | | 4,8,10, 13 | |
| Y | US-A-4 796 673 (UEDA) <br><br> * abstract; figures 1,6 * <br> * column 2, line 28 - column 2, line 65 * | 1,2,5,6, 9,11,12 | |
| | | | TECHNICAL FIELDS SEARCHED (Int. Cl.5) |
| | | | F16L <br> E03F |

The present search report has been drawn up for all claims

| Place of search | Date of completion of the search | Examiner |
|---|---|---|
| THE HAGUE | 11 FEBRUARY 1992 | NEUMANN E. |

EPO FORM 1503 03.82 (P0401)